(19) Europäisches Patentamt
European Patent Office
Office européen des brevets

(11) **EP 2 312 376 B1**

(12) **FASCICULE DE BREVET EUROPÉEN**

(45) Date de publication et mention
de la délivrance du brevet:
**26.08.2015 Bulletin 2015/35**

(51) Int Cl.:
**G02C 7/08** *(2006.01)*  **G02C 7/10** *(2006.01)*
**G02F 1/1333** *(2006.01)*

(21) Numéro de dépôt: **11153684.3**

(22) Date de dépôt: **24.06.2005**

(54) **Composant optique photochromique**

Photochromes optisches Element

Photochromic optical component

(84) Etats contractants désignés:
**AT BE BG CH CY CZ DE DK EE ES FI FR GB GR
HU IE IS IT LI LT LU MC NL PL PT RO SE SI SK TR**

(30) Priorité: **02.07.2004 FR 0407387
17.12.2004 FR 0413537**

(43) Date de publication de la demande:
**20.04.2011 Bulletin 2011/16**

(62) Numéro(s) de document de la (des) demande(s)
initiale(s) en application de l'article 76 CBE:
**05783793.2 / 1 763 699**

(73) Titulaire: **ESSILOR INTERNATIONAL
(Compagnie Générale d'Optique)
94220 Charenton le Pont (FR)**

(72) Inventeurs:
- **Cano, Jean-Paul
  94220 Charenton-le-Pont (FR)**
- **Bovet, Christian
  94220 Charenton-le-Pont (FR)**

(74) Mandataire: **Cabinet Plasseraud
52, rue de la Victoire
75440 Paris Cedex 09 (FR)**

(56) Documents cités:
WO-A-03/012542      DE-A1- 19 714 434
GB-A- 969 754       US-A- 5 067 795
US-A1- 2002 140 899  US-A1- 2003 152 849

**Description**

La présente invention concerne la réalisation d'éléments transparents incorporant des fonctions optiques. Elle s'applique notamment à la réalisation de verres ophtalmiques ayant diverses propriétés optiques.

Les verres correcteurs d'amétropie sont traditionnellement fabriqués en mettant en forme un matériau transparent d'indice de réfraction plus élevé que l'air. La forme des verres est choisie de façon que la réfraction aux interfaces entre le matériau et l'air provoque une focalisation appropriée sur la rétine du porteur. Le verre est généralement découpé pour être adapté à une monture, avec un positionnement approprié par rapport à la pupille de l'oeil corrigé.

Il est connu de faire varier l'indice de réfraction au sein du matériau d'une lentille ophtalmique, ce qui peut limiter les contraintes géométriques (voir par exemple EP-A-0 728 572). Cette méthode a surtout été proposée pour des lentilles de contact. Le gradient d'indice est obtenu par exemple par diffusion, irradiation sélective ou chauffage sélectif au cours de la fabrication de l'objet solide constituant la lentille. Si on prévoit une fabrication pour chaque cas d'amétropie traitable, la méthode ne se prête pas bien à une large industrialisation. Sinon, on peut fabriquer industriellement des séries d'objets à gradient d'indice, sélectionner celui qui est le plus proche de ce qui convient à un oeil à corriger et le remettre en forme par usinage et polissage pour l'adapter à cet oeil. Dans ce cas, la nécessité de remettre en forme les verres fait perdre beaucoup de l'attrait de la méthode par rapport aux méthodes traditionnelles.

Dans la demande de brevet US 2004/0008319, il est proposé de réaliser une modulation d'indice de réfraction parallèlement à la surface d'une lentille telle qu'un verre de lunettes, à l'aide de têtes de projection d'encre du genre employé dans les imprimantes. Ces têtes sont commandées pour déposer des gouttes de solutions de polymères d'indices différents sur la surface de l'objet de façon à obtenir une variation souhaitée de l'indice le long de la surface. Les polymères sont ensuite solidifiés par irradiation ou élimination de solvant. La maîtrise des phénomènes physiques d'interaction entre les gouttes et le substrat lors du dépôt et de la solidification rend cette méthode très difficile à pratiquer. En outre, sa mise en oeuvre à grande échelle est problématique car, là aussi, la modulation d'indice est obtenue au cours de la fabrication de l'objet solide constituant la lentille et la personnalisation ultérieure suppose une remise en forme du verre.

Un autre domaine d'application de l'invention est celui des verres photochromiques. La structure d'un tel verre incorpore une couche dont le spectre d'absorption lumineuse dépend de la lumière reçue. Le colorant photochromique de cette couche est habituellement solide, bien qu'on sache que les liquides ou les gels présentent des propriétés supérieures, notamment en termes de rapidité de réaction aux variations de luminosité.

On connaît tout de même des verres dans lesquels le colorant photosensible est un liquide ou un gel, des espaceurs étant prévus dans l'épaisseur de la couche pour définir le volume occupé par le colorant entre les couches transparentes adjacentes, avec une barrière étanche sur la périphérie de ce volume. Un tel verre est fabriqué pour une monture de lunettes spécifique. Il n'est pas possible de le découper pour l'adapter à une autre monture. Il est en outre difficile de l'adapter à l'amétropie d'un oeil à corriger. (voir par exemple GB 969754).

Il peut aussi être intéressant de faire varier l'absorption lumineuse parallèlement à la surface du verre, et/ou de rendre cette absorption dépendante de la polarisation de la lumière.

Parmi les autres types de verres ophtalmiques auxquels l'invention peut s'appliquer, on peut citer les systèmes actifs, dans lesquels une variation d'une propriété optique résulte d'un stimulus électrique. C'est le cas des verres électrochromes, ou encore des verres à propriétés réfractives modulables (voir par exemple US-A-5 359 444 ou WO 031077012). Ces techniques font généralement appel à des cristaux liquides ou à des systèmes électrochimiques.

Parmi ces différents types de verres, ou d'autres non nécessairement limités à l'optique ophtalmique, il serait souhaitable de pouvoir proposer une structure qui permette de mettre en place une ou plusieurs fonction(s) optique(s) de façon souple et modulaire, tout en conservant la possibilité de découper l'élément optique obtenu en vue de l'intégrer à une monture imposée ou choisie par ailleurs, ou à tout autre moyen de maintien dudit élément optique.

Un but de la présente invention est de répondre à ce besoin. Un autre but est que l'élément optique soit industrialisable dans de bonnes conditions.

L'invention propose ainsi un composant optique selon la revendication 1.

La structure se prête donc à de nombreuses applications, particulièrement celles faisant appel à des fonctions optiques évoluées. Elle implique une discrétisation par pixels de la surface de l'élément optique, ce qui offre une grande souplesse dans la conception mais aussi dans la mise en oeuvre de l'élément.

En particulier, il est remarquable que le composant optique puisse être découpé selon des formes périphériques souhaitées, permettant son intégration et son adaptation sur divers supports de maintien tels que, par exemple, une monture ou un casque. Le procédé peut aussi comprendre, sans affecter l'intégrité de la structure, une étape de perçage à travers le composant optique, pour la fixation de l'élément optique sur son support de maintien.

La couche constituée par l'ensemble de cellules aura avantageusement une hauteur inférieure à 100 $\mu$m. Selon différents modes de réalisation de l'invention, cette hauteur est préférentiellement comprise entre 10 $\mu$m et 50 $\mu$m, ou comprise entre 1 $\mu$m et 10 $\mu$m. En particulier, elle peut être égale à 5 $\mu$m environ.

Dans le cadre de l'invention, l'ensemble de cellules juxtaposées est de préférence configuré de façon à ce que le facteur de remplissage $\tau$, défini comme la surface occupée par les cellules remplies par la substance, par unité de surface du composant, soit supérieur à 90 %. En d'autres termes, les cellules de l'ensemble occupent au moins 90 % de la surface du composant, du moins dans une région du composant pourvue de l'ensemble de cellules. D'une façon avantageuse le facteur de remplissage est compris entre 90 % et 99,5 % inclus, et encore plus préférentiellement le facteur de remplissage est compris entre 96 % et 98,5 % inclus.

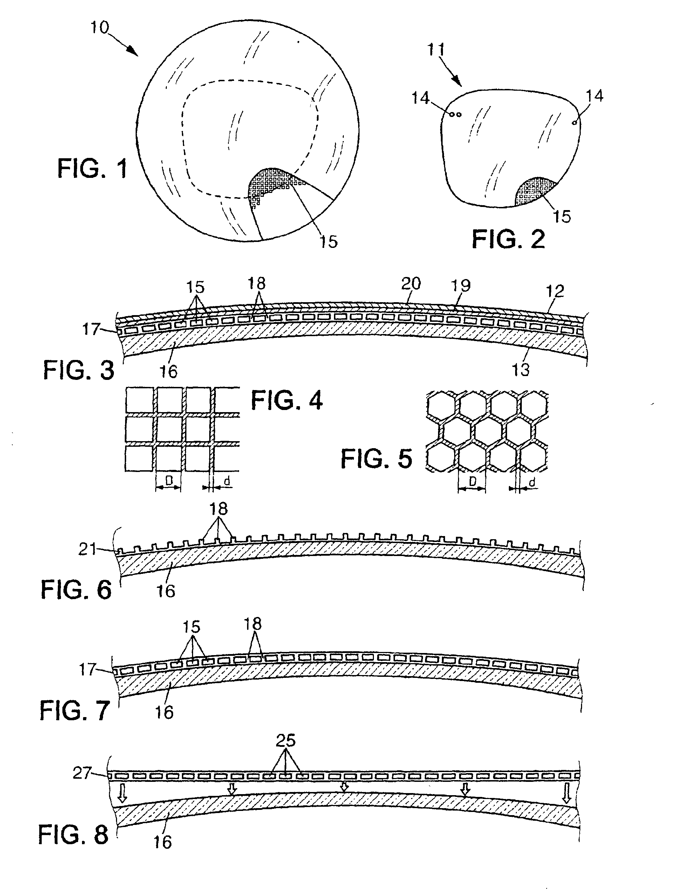

Pour que la structure de pixels ne provoque pas de phénomènes indésirables de diffraction, il est possible de dimensionner les cellules de façon adaptée par rapport aux longueurs d'onde du spectre de la lumière considérée. La géométrie du réseau de cellules se caractérise par des paramètres dimensionnels qui peuvent généralement se ramener aux dimensions des cellules parallèlement à la surface du composant optique, à leur hauteur correspondant à la hauteur h des parois qui les séparent, et à l'épaisseur d de ces parois, mesurée parallèlement à la surface du composant. Les dimensions des cellules parallèlement à la surface définissent l'aire $\sigma$ d'une cellule. Dans le cas simple où les cellules sont carrées avec des côtés de longueur D (figure 4), cette aire est donnée par $\sigma = D^2$, et le facteur de remplissage est de l'ordre de $\tau = \dfrac{D^2}{(D+d)^2}$. Les expressions de $\sigma$ et $\tau$ sont aisément obtenues pour toute autre organisation spatiale des cellules.

La principale source de défauts présente dans un réseau de cellules peut être constituée par le réseau de parois. Ces parois sont à l'origine d'un défaut de transparence du composant optique. Au sens de l'invention, on entend qu'un composant optique est transparent lorsque l'observation d'une image au travers de ce composant optique est perçue sans perte significative de contraste, c'est-à-dire lorsque la formation d'une image au travers du composant optique est obtenue sans nuisance de la qualité de l'image. Ainsi, les parois qui séparent les cellules du composant optique interagissent avec la lumière, en la diffractant. Au sens de l'invention, la diffraction est définie comme le phénomène d'éparpillement de la lumière que l'on observe lorsqu'une onde lumineuse est matériellement limitée ("Optique - Fondement et applications" - J.P. Pérez - Dunod — 7ème édition - Paris 2004 - Page 262). Plus spécifiquement, l'énergie de la lumière qui rencontre une paroi est concentrée dans un angle solide. De ce fait, la perception d'un point lumineux n'est plus un point au travers d'un composant optique qui comprend de telles parois. Cette diffraction microscopique se traduit macroscopiquement par de la diffusion. Cette diffusion macroscopique, ou diffusion incohérente, se traduit par un effet laiteux de la structure pixellisée du composant optique, et donc par une perte de contraste d'une l'image observée à travers la structure. Cette perte de contraste est assimilable à une perte de transparence, telle que définie précédemment. Un tel effet de diffusion macroscopique n'est pas acceptable pour un élément optique réalisé à partir d'un composant optique pixellisé au sens de l'invention, notamment pour une lentille ophtalmique qui doit être transparente et ne comporter aucun défaut cosmétique qui puisse gêner la vision du porteur de cette lentille. Un dimensionnement judicieux des cellules peut réduire l'énergie diffractée par les parois.

Ainsi dans le cadre de l'invention, on pourra donner aux cellules des dimensions supérieures à 1 $\mu$m parallèlement à la surface du composant. En particulier, ces dimensions de cellules parallèlement à la surface du composant peuvent être comprises entre 5 $\mu$m et 100 $\mu$m. Dans l'application à l'optique ophtalmique, on peut souhaiter éviter des cellules trop grandes qui donnerait lieu à une texture visible à la surface des verres. D'une façon avantageuse, les cellules pourront présenter une dimension comprise entre 10 $\mu$m et 40 $\mu$m.

Parallèlement à la surface du composant, les cellules seront de préférence séparées par des parois d'épaisseur comprise entre 0,10 $\mu$m et 5 $\mu$m. Dans un premier mode de réalisation de l'invention, les parois ont une épaisseur comprise entre 0,10 $\mu$m et 5 $\mu$m, et préférentiellement comprise entre 0,10 $\mu$m et 0,35 $\mu$m, de sorte qu'elles aussi ne produisent quasiment pas d'effets diffractifs indésirables dans le spectre visible. De telles parois fines peuvent procurer un facteur de remplissage $\tau$ très élevé de la surface optique par la substance à propriété otique intéressante.

Dans un second mode de réalisation, les parois ont une épaisseur comprise entre 0,40 $\mu$m et 2,00 $\mu$m. Cette épaisseur peut être égale à 1,00 $\mu$m par exemple. Dans un troisième mode de réalisation, les parois ont une épaisseur comprise entre 2,00 $\mu$m et 3,5 $\mu$m, pouvant être, par exemple, égale à 3,0 $\mu$m. Le matériau constituant les parois des cellules sera choisi de telle manière que les cellules ne seront plus discernables du matériau de remplissage desdites cellules. Par non discernable, on entend sans diffusion visible, sans diffraction visible, et sans réflexions parasites. En particulier, ceci peut être réalisé pratiquement par un ajustement convenable de l'indice de réfraction et de l'absorption.

L'ensemble de cellules peut être formé directement sur un support transparent rigide, ou au sein d'un film transparent souple reporté ensuite sur un support transparent rigide. Ledit support transparent rigide peut être convexe, concave, ou plan sur le côté recevant l'ensemble des cellules.

Dans un mode de réalisation du procédé, la substance à propriété optique contenue dans certaines au moins des cellules est sous forme de liquide ou de gel. Ladite substance peut notamment présenter au moins une des propriétés optiques choisies parmi la coloration, le photochromisme, la polarisation et l'indice de réfraction.

Elle peut notamment être sous forme de liquide ou de gel et incorporer un colorant photochromique, ce qui permet de réaliser commodément un élément photochromique à réponse très rapide.

Pour l'application à la fabrication de lentilles correctrices, il convient que des cellules différentes du composant optique contiennent des substances d'indice de réfraction différent. L'indice de réfraction sera typiquement adapté pour varier le long de la surface du composant en fonction de l'amétropie estimée d'un oeil à corriger.

Pour l'application à la fabrication de lentilles optiques présentant une propriété optique de polarisation, les cellules du composant optique renfermeront notamment des cristaux liquides associés ou non à des colorants.

Un objet de la présente invention est également un procédé de production d'un composant optique tel que défini précédemment, qui comprend la formation sur un substrat d'un réseau de parois pour délimiter les cellules parallèlement à ladite surface du composant, un remplissage collectif ou individuel des cellules avec la substance à propriété optique sous forme de liquide ou de gel, et la fermeture des cellules sur leur côté opposé au substrat.

L'ensemble de cellules du composant optique peut inclure plusieurs groupes de cellules contenant des substances différentes. De même chaque cellule peut être remplie avec une substance présentant une ou plusieurs propriétés optiques telles que décrites précédemment. Il est également possible d'empiler plusieurs ensembles de cellules sur l'épaisseur du composant. Dans ce mode de réalisation les ensembles de cellules peuvent avoir des propriétés identiques ou différentes au sein de chaque couche, ou les cellules au sein de chaque ensemble de cellules peuvent également présenter des propriétés optiques différentes. Ainsi il est possible d'envisager d'avoir une couche dans laquelle l'ensemble de cellules contient une substance permettant d'obtenir une variation de l'indice de réfraction et une autre couche ou l'ensemble de cellules contient une substance à propriété photochromique.

Un autre aspect de l'invention se rapporte à un composant optique, utilisé dans le procédé ci-dessus. Ce composant optique comprend au moins un ensemble transparent de cellules juxtaposées parallèlement à une surface du composant. Chaque cellule est hermétiquement fermée et contient une substance à propriété optique. Les cellules sont préférablement séparées par des parois de hauteur inférieure à 100 μm, avantageusement inférieure à 50 μm, et peuvent avoir des dimensions supérieures à 1 μm, parallèlement à la surface du composant.

Un autre aspect encore de l'invention se rapporte à un élément optique transparent, notamment un verre de lunettes, réalisé en découpant un tel composant optique.

D'autres particularités et avantages de la présente invention apparaîtront dans la description ci-après d'exemples de réalisation non limitatifs, en référence aux dessins annexés, dans lesquels :

- la figure 1 est une vue de face d'un composant optique selon l'invention ;

- la figure 2 est une vue de face d'un élément optique obtenu à partir de ce composant optique ;

- la figure 3 est une vue schématique en coupe d'un composant optique selon l'invention ;

- les figures 4 et 5 sont des schémas montrant deux types de maillage utilisables pour agencer les cellules dans un composant optique selon l'invention ;

- les figures 6 et 7 sont des vues schématiques en coupe montrant ce composant optique à deux étapes de sa fabrication;

- la figure 8 est une vue schématique en coupe illustrant un autre mode de fabrication d'un composant optique selon l'invention.

Le composant optique 10 représenté sur la figure 1 est une ébauche pour verre de lunettes. Un verre de lunette comprend une lentille ophtalmique. Par lentille ophtalmique, on entend les lentilles s'adaptant à une monture de lunette pour protéger l'oeil et/ou corriger la vue, ces lentilles étant choisies parmi les lentilles afocales, unifocales, bifocales, trifocales et progressives.

Si l'optique ophtalmique est un domaine d'application préféré de l'invention, on comprendra que cette invention est applicable à des éléments optiques transparents d'autres natures, comme par exemple des lentilles pour instruments d'optiques, des filtres, des lentilles de visée optique, des visières oculaires, des optiques de dispositifs d'éclairage, etc. Au sein de l'invention, on inclut dans l'optique ophtalmique les lentilles ophtalmiques, mais aussi les lentilles de contact et les implants oculaires.

La figure 2 montre un verre de lunette 11 obtenu en découpant l'ébauche 10 suivant un contour prédéfini, représenté en trait interrompu sur la figure 1. Ce contour est a priori arbitraire, dès lors qu'il s'inscrit dans l'étendue de l'ébauche. Des ébauches fabriquées en série sont ainsi utilisables pour obtenir des verres adaptables à une grande variété de montures de lunettes. Le bord du verre découpé peut sans problème être détouré, de façon classique, pour lui conférer une forme adaptée à la monture et au mode de fixation du verre sur cette monture et/ou pour des raisons esthétiques. Il est également possible d'y percer des trous 14, par exemple pour recevoir des vis servant à sa fixation sur la monture.

La forme générale de l'ébauche 10 peut être conforme aux standards de l'industrie, avec par exemple un contour circulaire de diamètre 60 mm, une face avant convexe 12 et une face arrière concave 13 (figure 3). Les outils traditionnels de découpe, de détourage et de perçage peuvent ainsi être utilisés pour obtenir le verre 11 à partir de l'ébauche 10.

Sur les figures 1 et 2, un arrachement partiel des couches superficielles fait apparaître la structure pixellisée de l'ébauche 10 et du verre 11. Cette structure consiste en un réseau de cellules ou microcuves 15 formées dans une couche 17 du composant transparent (figure 3). Sur ces figures, les dimensions de cette couche 17 et des cellules 15 ont été exagérées par rapport à celles de l'ébauche 10 et de son substrat 16 afin de faciliter la lecture du dessin.

Les dimensions latérales D des cellules 15 (parallèlement à la surface de l'ébauche 10) sont supérieures au micron pour éviter les phénomènes de diffraction dans le spectre visible. En pratique, ces dimensions sont comprises entre 10 $\mu$m et 100 $\mu$m. Il en résulte que le réseau de cellules est réalisable avec des technologies bien maîtrisées dans le domaine de la microélectronique ou des dispositifs micromécaniques.

Il est alors possible que le réseau de cellules ne soit pas visible sur le verre 11 ou sur l'ébauche 10.

Selon l'invention, la hauteur h de la couche 17 qui incorpore le réseau de cellules 15 est de préférence inférieure à 100 $\mu$m, et plus préférentiellement comprise entre 1 $\mu$m et 10 $\mu$m inclus. Avantageusement, cette hauteur h est d'environ 5 $\mu$m.

Les parois 18 séparant les cellules 15 assurent leur étanchéité mutuelle. Elles ont une épaisseur d comprise entre 0,10 $\mu$m et 5,00 $\mu$m inclus, permettant notamment d'obtenir un facteur de remplissage élevé du composant optique. Cette épaisseur de parois peut être égale, par exemple, à 0,35 $\mu$m environ. Un facteur de remplissage élevé procure une bonne efficacité de la fonction optique recherchée, fournie par la substance contenue dans les cellules 15. Ce facteur de remplissage est compris entre 90 % et 99,5 % inclus, avantageusement compris entre 96 % et 98,5 % inclus. Une combinaison judicieuse des paramètres de dimension latérale (D) des cellules et d'épaisseur (d) et de hauteur (h) des parois séparant les cellules, permet d'obtenir un composant optique présentant un taux de remplissage élevé, non visible en fonction de la ou des propriétés optiques des substances contenues dans lesdites cellules.

Par exemple, avec des cellules agencées selon un maillage carré (figure 4) ou hexagonal (figure 5), des parois 18 d'épaisseur d = 2 $\mu$m et des pixels de dimension D = 100 $\mu$m, 4 % seulement de la surface est absorbante ($\tau \approx$ 96 %). Pour des parois 18 d'épaisseur d = 1 $\mu$m et des pixels de dimension D = 40 $\mu$m (ou d = 0,5 $\mu$m et D = 20$\mu$m), environ 5 % seulement de la surface est absorbante ($\tau \approx$ 95 %). On pourra se limiter à descendre jusqu'à environ $\tau$ = 90 %.

Le maillage de type hexagonal, ou en nid d'abeilles, selon la figure 5 est un agencement préféré car il optimise la tenue mécanique du réseau de cellules pour un rapport d'aspect donné. Néanmoins, dans le cadre de l'invention toutes les possibilités de maillage respectant une géométrie cristalline sont envisageables. Ainsi un maillage de géométrie rectangulaire, triangulaire, ou octogonale est réalisable. Dans le cadre de l'invention, il est également possible d'avoir une combinaison de différentes formes géométriques de maillages pour former le réseau de cellules, tout en respectant les dimensions des cellules telles que définies précédemment.

La couche 17 incorporant le réseau de cellules 15 peut être recouverte par un certain nombre de couches additionnelles 19, 20 (figure 3), comme il est usuel en optique ophtalmique. Ces couches ont par exemple des fonctions de résistance aux chocs, de résistance à la rayure, de coloration, d'anti-reflet, d'anti-salissure, etc. Dans l'exemple représenté, la couche 17 incorporant le réseau de cellules est placée immédiatement au-dessus du substrat transparent 16, mais on comprendra qu'une ou plusieurs couches intermédiaires peuvent se trouver entre eux, tels que des couches présentant des fonctions de résistance aux chocs, de résistance à la rayure, de coloration.

D'autre part, il est possible que plusieurs réseaux de cellules soient présents dans l'empilement de couches formé sur le substrat. Il est ainsi possible, par exemple, que l'empilement des couches comporte notamment une couche de réseaux de cellules contenant une substance permettant de conférer à l'élément des fonctions photochromiques, une autre couche permettant de conférer à l'élément des fonctions de variations d'indice de réfraction. Ces couches de réseaux de cellules peuvent également être alternées avec des couches additionnelles telles que décrites précédemment.

Les diverses combinaisons sont possibles grâce notamment à la grande souplesse du procédé de réalisation de l'élément optique transparent. Ainsi dans le cadre de l'invention le composant optique peut comprendre un réseau de cellules dans lequel chaque cellule est remplie avec une substance présentant une ou plusieurs propriétés optiques, ou bien dans lequel l'ensemble de cellules 15 inclut plusieurs groupes de cellules contenant des substances différentes. Le composant optique peut aussi être constitué d'un empilement comportant au moins deux couches d'ensemble de cellules, chaque ensemble de cellules présentant des propriétés optiques identiques, ou chaque ensemble de cellules présentant des propriétés optiques différentes, ou les cellules au sein de chaque ensemble de cellules présentant des propriétés optiques différentes.

Le substrat transparent 16 peut être en verre ou en différents matériaux polymères couramment utilisés en optique ophtalmique. Parmi les matériaux polymères utilisables, on peut citer à titre indicatif et non limitatif, les matériaux polycarbonates, polyamides, polyimides, polysulfones, copolymères de polyéthylénétérephtalate et polycarbonate, polyoléfines, notamment polynorbornènes, polymères et copolymères de diéthylène glycol bis(allylcarbonate), polymères et copolymères (méth)acryliques, notamment polymères et copolymères (méth)acryliques dérivés de bisphénol-A, polymères et copolymères thio(méth)acryliques, polymères et copolymères uréthane et thiouréthane, polymères et copolymères époxy, et polymères et copolymères épisulfide.

La couche 17 incorporant le réseau de cellules est de préférence située sur sa face avant convexe 12, la face arrière concave 13 restant libre pour être éventuellement remise en forme par usinage et polissage si cela est nécessaire. Cependant, dans le cas où l'élément optique transparent est un verre correcteur, la correction d'amétropie peut être réalisée en modulant spatialement l'indice de réfraction des substances contenues dans les cellules 15, ce qui permet de s'affranchir de la retouche de la face arrière, et par conséquent de disposer d'une plus grande souplesse dans la conception et/ou la mise en oeuvre des différentes couches et revêtements dont doit être muni le verre. Le composant optique peut également être situé sur la face concave d'une lentille. Bien évidemment, le composant optique peut aussi être intégré sur un élément optique plan.

Les figures 6 et 7 illustrent une première manière de réaliser le réseau de cellules sur le substrat 16. La technique est ici similaire à celles utilisées pour fabriquer des dispositifs d'affichage électrophorétiques. De telles techniques sont décrites par exemple dans les documents WO 00/77570, WO 02l01281, US 2002/0176963, US 6 327 072 ou US 6 597 340. Le réseau de cellules est également réalisable en utilisant des procédés de fabrication, issus de la microélectronique, bien connu par l'homme du métier. On peut citer à titre illustratif et non limitatif, les procédés tels que l'impression à chaud, l'embossage à chaud, la photolithographie (hard, soft, positive, négative), la microdéposition telle que l'impression par micro-contact, la sérigraphie, ou encore l'impression par jet d'encre.

Dans l'exemple considéré, on dépose d'abord sur le substrat 16 un film d'une solution de monomères polymérisable sous l'action d'un rayonnement, par exemple ultraviolet. Ce film est soumis à un rayonnement ultraviolet à travers un masque qui occulte des carrés ou hexagones répartis en réseau et correspondant aux positions des microcuves 15. La polymérisation sélective laisse en place les parois 18 dressées au-dessus d'une couche de support 21. La solution de monomères est alors évacuée et le composant est dans l'état représenté sur la figure 6.

Pour obtenir une structure analogue, une autre possibilité est de recourir à une technique de photolithographie. On commence par déposer sur le substrat 16 une couche de matériau, par exemple polymère, sur une épaisseur de l'ordre de la hauteur visée pour les parois 18, par exemple 5 $\mu$m ou 20 $\mu$m. On dépose ensuite sur cette couche un film de photorésist qu'on expose à travers un masque selon un motif en grille. Les zones non exposées sont éliminées au développement du photorésist pour laisser un masque aligné sur les positions des parois, à travers lequel la couche de matériau est soumise à une gravure anisotrope. Cette gravure, qui forme les microcuves 15, est poursuivie jusqu'à la profondeur désirée, après quoi le masque est éliminé par attaque chimique.

A partir de l'état représenté sur la figure 6, les microcuves 15 sont remplies avec la substance à propriété optique, à l'état de liquide ou de gel. Un traitement préalable de la face avant du composant peut éventuellement être appliqué pour faciliter le mouillage en surface du matériau des parois et du fond des microcuves. La solution ou suspension formant la substance à propriété optique peut être la même pour toutes les microcuves du réseau, auquel cas elle peut être introduite simplement par immersion du composant dans un bain approprié, par un procédé de type sérigraphique, par un procédé de revêtement par centrifugation (spin process), par un procédé d'étalement de la substance à l'aide d'un rouleau ou d'une raclette, ou encore par un procédé de spray. Il est également possible de l'injecter localement dans les microcuves individuelles à l'aide d'une tête de projection d'encre.

Cette dernière méthode sera typiquement retenue lorsque la substance à propriété optique est différenciée d'une microcuve à une autre, plusieurs têtes de projection étant déplacées le long de la surface pour remplir successivement les microcuves.

Cependant, dans le cas notamment où les microcuves sont formées par gravure sélective, une autre possibilité est de creuser d'abord un groupe de microcuves, de les remplir collectivement avec une première substance puis de les obturer, le reste de la surface du composant restant masqué pendant ces opérations. On réitère ensuite la gravure sélective à travers un masque de résist recouvrant au moins les zones de microcuves déjà remplies en plus des zones de paroi, et on procède à un remplissage des nouvelles microcuves avec une substance différente puis à leur obturation. Ce processus peut être répété une ou plusieurs fois si on souhaite distribuer des substances différenciées le long de la surface du composant.

Pour fermer hermétiquement un ensemble de microcuves remplies, on applique par exemple un film plastique collé, soudé thermiquement ou laminé à chaud sur le haut des parois 18. On peut aussi déposer sur la zone à obturer un matériau polymérisable en solution, non miscible avec la substance à propriété optique contenue dans les microcuves, puis faire polymériser ce matériau, par exemple à chaud ou sous irradiation.

Une fois que le réseau de microcuves 15 a été complété (figure 7), le composant peut recevoir les couches ou revêtements supplémentaires 19, 20 pour terminer sa fabrication. Des composants de ce type sont fabriqués en série puis stockés pour être plus tard repris et découpés individuellement conformément aux besoins d'un client.

Si la substance à propriété optique n'est pas destinée à rester à l'état de liquide ou de gel, on peut lui appliquer un traitement de solidification, par exemple une séquence de chauffage et/ou d'irradiation, à un stade approprié à partir du moment où la substance a été déposée.

Dans une variante représentée sur la figure 8, le composant optique constitué d'un réseau de microcuves 25 est construit sous la forme d'un film transparent souple 27. Un tel film 27 est réalisable par des techniques analogues à celles décrites précédemment. Dans ce cas le film 27 est réalisable sur un support plan et non convexe ou concave.

Le film 27 est par exemple fabriqué industriellement sur une étendue relativement grande, pour faire des économies sur l'exécution groupée des étapes du procédé, puis découpé aux dimensions appropriées pour être reporté sur le substrat 16 d'une ébauche. Ce report peut être effectué par collage du film souple, par thermoformage du film, voire par un phénomène physique d'adhérence sous vide. Le film 27 peut ensuite recevoir divers revêtements, comme dans le cas précédent, ou bien être reporté sur le substrat 16 lui-même revêtu d'une ou plusieurs couches additionnelles telles que décrites précédemment.

Selon un example comparatif, la propriété optique de la substance introduite dans les microcuves 15 se rapporte à son indice de réfraction. On module l'indice de réfraction de la substance le long de la surface du composant pour obtenir une lentille correctrice. Dans une première variante de l'invention, la modulation peut être réalisée en introduisant des substances d'indices différents lors de la fabrication du réseau de microcuves 15.

Dans une autre variante de l'invention, la modulation peut être réalisée en introduisant dans les microcuves 15 une substance dont l'indice de réfraction peut être réglé ultérieurement sous irradiation. L'inscription de la fonction optique correctrice est alors effectuée en exposant l'ébauche 10 ou le verre 11 à de la lumière dont l'énergie varie le long de la surface pour obtenir le profil d'indice souhaité afin de corriger la vision d'un patient. Cette lumière est typiquement celle produite par un laser, l'équipement d'écriture étant semblable à celui utilisé pour graver des CDROM ou autres supports optiques de mémoire. L'exposition plus ou moins grande de la substance photosensible peut résulter d'une modulation de la puissance du laser et/ou du choix du temps d'exposition.

Parmi les substances utilisables dans cette application, on peut citer, par exemple, les matériaux mésoporeux ou les cristaux liquides. Ces cristaux liquides peuvent être figés par une réaction de polymérisation, par exemple induite par irradiation. On peut ainsi les figer dans un état choisi pour introduire un retard optique déterminé dans les ondes lumineuses qui les traversent. Dans le cas d'un matériau mésoporeux le contrôle de l'indice de réfraction du matériau se fait au travers de la variation de sa porosité. Une autre possibilité est d'utiliser des photopolymères dont une propriété bien connue est de changer d'indice de réfraction au cours de la réaction de polymérisation induite par irradiation. Ces changements d'indice sont dus à une modification de la densité du matériau et à un changement de la structure chimique. On utilisera de préférence des photopolymères qui ne subissent qu'une très faible variation de volume lors de la réaction de polymérisation.

La polymérisation sélective de la solution ou suspension est réalisée en présence d'un rayonnement différencié spatialement par rapport à la surface du composant, afin d'obtenir la modulation d'indice souhaitée. Cette modulation est déterminée préalablement en fonction de l'amétropie estimée de l'oeil d'un patient à corriger.

Selon l'invention, la substance introduite sous forme de liquide ou de gel dans les microcuves a une propriété photochromique. Parmi les substances utilisés dans cette application on peut citer à titre d'exemples les composés photochromique contenant un motif central tel qu'un noyau spirooxazine, spiro-indoline[2,3']benzoxazine, chromène, spiroxazine homoazaadamantane, spirofluorène-(2*H*)-benzopyrane, naphto[2,1-*b*]pyrane tels que décrit notamment dans les demandes de brevet et brevets FR 2763070, EP 0676401, EP 0489655, EP 0653428, EP 0407237, FR 2718447, US 6,281,366 ou EP 1204714.

Dans le cadre de l'invention, la substance à propriété optique peut encore être un colorant, ou un pigment apte à apporter une modification du taux de transmission.

## Revendications

1. Composant optique, comprenant au moins un ensemble transparent de cellules (15 ; 25) juxtaposées parallèlement à une surface du composant, chaque cellule étant hermétiquement fermée et contenant une substance à propriété optique,
dans lequel les cellules (15 ; 25) sont séparées par des parois (18) d'épaisseur comprise entre 0,10 $\mu$m et 5 $\mu$m, parallèlement à la surface du composant, les dites parois s'étendant perpendiculairement à la surface du composant, et dans lequel la substance contenue dans au moins un groupe des cellules (15 ; 25) est une substance photochromique.

2. Composant optique selon la revendication 1, dans lequel l'ensemble de cellules constitue une couche ayant, perpendiculairement à ladite surface, une hauteur inférieure à 100 $\mu$m.

3. Composant optique selon la revendication 2, dans lequel la couche constituée par l'ensemble de cellules a une hauteur comprise entre 10 $\mu$m et 50 $\mu$m.

4. Composant optique selon l'une quelconque des revendications 1 à 3, comprenant un support transparent rigide (16) sur lequel est formé l'ensemble de cellules (15).

5. Composant optique selon l'une quelconque des revendications 1 à 3, comprenant un support transparent rigide (16) sur lequel est reporté un film transparent (27) incorporant l'ensemble de cellules (25).

6. Composant optique selon la revendication 4 ou 5, dans lequel le support transparent rigide (16) est convexe, concave ou plan sur le côté présentant l'ensemble de cellules.

7. Composant optique selon l'une quelconque des revendications précédentes, dans lequel la substance à propriété optique contenue dans certaines au moins des cellules (15 ; 25) est sous forme de liquide ou de gel.

8. Composant optique selon l'une quelconque des revendications précédentes, dans lequel l'ensemble de cellules (15 ; 25) inclut plusieurs groupes de cellules contenant des substances différentes.

9. Composant optique selon la revendication 8, dans lequel la propriété optique est choisie parmi une propriété de coloration, de photochromisme, de polarisation, et d'indice de réfraction pour les cellules d'au moins un autre groupe de cellules.

10. Composant optique selon l'une quelconque des revendications précédentes, dans lequel plusieurs ensembles de cellules sont empilés sur l'épaisseur dudit composant.

11. Composant optique selon la revendication 10, dans lequel chaque ensemble de cellules présente des propriétés optiques identiques, ou chaque ensemble de cellules présente des propriétés optiques différentes, ou les cellules au sein de chaque ensemble de cellules présentent des propriétés optiques différentes.

12. Composant optique selon l'une quelconque des revendications précédentes, dans lequel le facteur de remplissage est compris entre 90 % et 99,5 % inclus.

13. Composant optique selon l'une quelconque des revendications précédentes, dans lequel les cellules (15, 25) ont une dimension comprise entre 5 $\mu$m et 100 $\mu$m, parallèlement à la surface du composant.

14. Composant optique selon l'une quelconque des revendications précédentes, dans lequel les cellules (15 ; 25) sont séparées par des parois (18) en matériau ne réfléchissant pas la lumière et sont de dimensions comprises entre 0,40 $\mu$m et 3,00 $\mu$m.

15. Composant optique selon l'une quelconque des revendications précédentes, utile pour la fabrication d'un élément optique transparent choisi parmi les lentilles ophtalmiques, les lentilles pour instrument d'optique, les filtres, les lentilles de visée optique, les visières oculaires, et les optiques destinées à des dispositifs d'éclairage.

16. Utilisation d'un composant optique selon l'une quelconque des revendications 1 à 14 dans la fabrication d'un élément optique transparent choisi parmi les lentilles ophtalmiques, les lentilles de contact, les implants oculaires, les lentilles pour instruments d'optique, les filtres, les lentilles de visée optique, les visières oculaires, et les optiques de dispositifs d'éclairage.

17. Verre de lunettes, réalisé en découpant un composant optique (10) selon l'une quelconque des revendications 1 à 14, dans lequel au moins un perçage est réalisé à travers le composant (10) pour la fixation du verre (11) sur une monture.

**Patentansprüche**

1. Optische Komponente, die wenigstens eine lichtdurchlässige Gesamtheit von Zellen (15; 25) umfasst, die parallel neben einer Oberfläche der Komponente liegen, wobei jede Zelle hermetisch geschlossen ist und eine Substanz mit optischer Eigenschaft enthält, wobei die Zellen (15; 25) durch Wände (18) mit einer Dicke im Bereich von 0,10 $\mu$m bis 5 $\mu$m parallel zu der Oberfläche der Komponente getrennt sind, wobei sich diese Wände senkrecht zu der Oberfläche der Komponente erstrecken, und wobei die in wenigstens einer Gruppe von Zellen (15; 25) enthaltene Substanz eine photochrome Substanz ist.

2. Optische Komponente nach Anspruch 1, wobei die Gesamtheit von Zellen eine Schicht bildet, die senkrecht zu der Oberfläche eine Höhe von weniger als 100 $\mu$m hat.

3. Optische Komponente nach Anspruch 2, wobei die Schicht, die durch die Gesamtheit von Zellen gebildet ist, eine Höhe im Bereich von 10 $\mu$m bis 50 $\mu$m hat.

4. Optische Komponente nach einem der Ansprüche 1 bis 3, die einen starren lichtdurchlässigen Träger (16) umfasst, auf dem die Gesamtheit von Zellen (15) gebildet ist.

5. Optische Komponente nach einem der Ansprüche 1 bis 3, die einen starren lichtdurchlässigen Träger (16) umfasst, auf den ein lichtdurchlässiger Film (27) aufgetragen ist, der die Gesamtheit von Zellen (25) enthält.

6. Optische Komponente nach Anspruch 4 oder 5, wobei der starre lichtdurchlässige Träger (16) auf der Seite, die die Gesamtheit von Zellen aufweist, konvex, konkav oder eben ist.

7. Optische Komponente nach einem der vorhergehenden Ansprüche, wobei die Substanz mit optischer Eigenschaft, die in wenigstens einigen der Zellen (15; 25) enthalten ist, in Form einer Flüssigkeit oder eines Gels vorliegt.

8. Optische Komponente nach einem der vorhergehenden Ansprüche, wobei die Gesamtheit von Zellen (15; 25) mehrere Gruppen von Zellen enthält, die unterschiedliche Substanzen enthalten.

9. Optische Komponente nach Anspruch 8, wobei die optische Eigenschaft unter einer Farbgebungseigenschaft, einer Photochromie-Eigenschaft, einer Polarisationseigenschaft und einer Brechungsindexeigenschaft für die Zellen wenigstens einer anderen Gruppe von Zellen gewählt ist.

10. Optische Komponente nach einem der vorhergehenden Ansprüche, wobei die mehreren Gesamtheiten von Zellen in Dickenrichtung der Komponente gestapelt sind.

11. Optische Komponente nach Anspruch 10, wobei jede Gesamtheit von Zellen gleiche optische Eigenschaften aufweist oder jede Gesamtheit von Zellen unterschiedliche optische Eigenschaften aufweist oder die Zellen innerhalb jeder Gesamtheit von Zellen unterschiedliche optische Eigenschaften aufweisen.

12. Optische Komponente nach einem der vorhergehenden Ansprüche, wobei der Füllgrad im Bereich von 90 % bis 99,5 % einschließlich der Grenzen liegt.

13. Optische Komponente nach einem der vorhergehenden Ansprüche, wobei die Zellen (15, 25) parallel zu der Oberfläche der Komponente eine Abmessung haben, die im Bereich von 5 $\mu$m bis 100 $\mu$m liegt.

14. Optische Komponente nach einem der vorhergehenden Ansprüche, wobei die Zellen (15; 25) durch Wände (18) getrennt sind, die aus einem Licht nicht reflektierenden Material gebildet sind und Abmessungen im Bereich von 0,40 $\mu$m bis 3,00 $\mu$m haben.

15. Optische Komponente nach einem der vorhergehenden Ansprüche, die bei der Fertigung eines lichtdurchlässigen optischen Elements verwendet wird, das unter Augenlinsen, Linsen für optische Instrumente, Filtern, Visieroptik-Linsen, Okularvisieren und Optiken, die für Beleuchtungsvorrichtungen bestimmt sind, gewählt ist.

16. Verwendung einer optischen Komponente nach einem der Ansprüche 1 bis 14 bei der Fertigung eines lichtdurchlässigen optischen Elements, das unter Augenlinsen, Kontaktlinsen, Okularimplantaten, Linsen für optische Instrumente, Filtern, Visieroptik-Linsen, Okularvisieren und Optiken für Beleuchtungsvorrichtungen gewählt sind.

17. Brillenglas, das durch Zuschneiden einer optischen Komponente (10) nach einem der Ansprüche 1 bis 14 hergestellt ist, wobei wenigstens eine Durchlochung durch die Komponente (10) für die Befestigung des Glases (11) an einem Gestell verwirklicht ist.

## Claims

1. Optical component, comprising at least one transparent array of cells (15; 25) that are juxtaposed parallel to a surface of the component, each cell being hermetically sealed and containing a substance having an optical property,
   in which the cells (15; 25) are separated by walls (18) of thickness comprised between 0.10 $\mu$m and 5 $\mu$m parallel to the surface of the component, said walls extending perpendicular to the surface of the component, and
   in which the substance contained in at least one group of the cells (15; 25) is a photochromic substance.

2. Optical component according to Claim 1, in which the array of cells forms a layer having, perpendicular to said surface, a height smaller than 100 $\mu$m.

3. Optical component according to Claim 2, in which the layer formed by the array of cells has a height comprised between 10 $\mu$m and 50 $\mu$m.

4. Optical component according to any one of Claims 1 to 3, comprising a stiff transparent carrier (16) on which the array of cells (15) is formed.

5. Optical component according to any one of Claims 1 to 3, comprising a stiff transparent carrier (16) to which a transparent film (27) incorporating the array of cells (25) is added.

6. Optical component according to Claim 4 or 5, in which the stiff transparent carrier (16) is convex, concave or planar on the side comprising the array of cells.

7.  Optical component according to any one of the preceding claims, in which the substance having an optical property contained in at least some of the cells (15; 25) takes the form of a liquid or gel.

8.  Optical component according to any one of the preceding claims, in which the array of cells (15; 25) includes a plurality of groups of cells containing different substances.

9.  Optical component according to Claim 8, in which the optical property is chosen from a hue, photochromism, polarisation and refractive index property for the cells at least of another group of cells.

10. Optical component according to any one of the preceding claims, in which a plurality of arrays of cells are stacked in the thickness of said component.

11. Optical component according to Claim 10, in which each array of cells has identical optical properties, or each array of cells has different optical properties, or the cells within each array of cells have different optical properties.

12. Optical component according to any one of the preceding claims, in which the fill factor is comprised between 90% and 99.5% inclusive.

13. Optical component according to any one of the preceding claims, in which the cells (15, 25) are comprised between 5 $\mu$m and 100 $\mu$m in size parallel to the surface of the component.

14. Optical component according to any one of the preceding claims, in which the cells (15; 25) are separated by walls (18) made of a material that does not reflect light, and are comprised between 0.40 $\mu$m and 3.00 $\mu$m in size.

15. Optical component according to any one of the preceding claims, useful for manufacturing a transparent optical element chosen from ophthalmic lenses, lenses for optical instruments, filters, lenses for sighting optics, protective visors and optics intended for lighting devices.

16. Use of an optical component according to any one of Claims 1 to 14 in the manufacture of a transparent optical element chosen from ophthalmic lenses, contact lenses, ocular implants, lenses for optical instruments, filters, lenses for sighting optics, protective visors and optics for lighting devices.

17. Spectacle lens produced by cutting an optical component (10) according to any one of Claims 1 to 14, in which at least one hole for fastening the lens (11) in a frame is drilled through the component (10).

EP 2 312 376 B1

FIG. 1

FIG. 2

FIG. 3

FIG. 4

FIG. 5

FIG. 6

FIG. 7

FIG. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0728572 A
- US 20040008319 A
- GB 969754 A
- US 5359444 A
- WO 031077012 A
- WO 0077570 A
- WO 02L01281 A
- US 20020176963 A
- US 6327072 B

- US 6597340 B
- FR 2763070
- EP 0676401 A
- EP 0489655 A
- EP 0653428 A
- EP 0407237 A
- FR 2718447
- US 6281366 B
- EP 1204714 A

**Littérature non-brevet citée dans la description**

- **J.P. PÉREZ.** Optique - Fondement et applications. 2004, 262